# EUROPEAN PATENT APPLICATION

(11) **EP 4 450 394 A1**
(43) Date of publication of application: **23.10.2024**
(21) Application number: 23168656.9
(22) Date of filing: 19.04.2023
(51) Int. Cl.: B64D 27/24

(54) **ELECTRIC AIRCRAFT ENGINE, AND METHOD OF MANUFACTURING A VANE FOR AN ELECTRIC AIRCRAFT ENGINE**

(71) Applicant: Lilium eAircraft GmbH, 82234 Wessling (DE)
(72) Inventor: WIEGAND, Daniel, 82234 Wessling (DE); ROESICK, Joel, 82234 Wessling (DE); ANGERER, Martin, 82234 Wessling (DE); LAVEAU, Benoit, 82234 Wessling (DE); BESTHORN, Florian, 82234 Wessling (DE); VERMEIREN, Sebastien, 82234 Wessling (DE); MIRANDA, Pedro Henrique Silva, 82234 Wessling (DE)
(74) Representative: Grünecker Patent- und Rechtsanwälte PartG mbB

(57) **Abstract**

According to the present invention, at least one power electronic component (3a, 3b, 4a, 4b, 5a, 5b, 6, 7, 8) is embedded in at least one of a plurality of vanes (11) of an electric aircraft engine (1). This enables cooling of the at least one power electronic component (in particular MOSFETs of an inverter for driving an electric motor of the electric aircraft engine) without additional air or liquid cooling equipment (such as cooling fins or radiators), thus reducing mass and thermal losses.

## Description

The present invention relates to an electric aircraft engine and to a civil aircraft equipped with at least one such electric aircraft engine. The present invention also relates to a method of manufacturing a vane for an electric aircraft engine.

The development of all-electric and hybrid-electric aircraft with fuel cells and batteries has attracted much attention recently, as this technology can help achieve a zero-emission world. Since the entire power electronics system is directly related to the control and transmission of energy, it affects the performance of the aircraft in operation.

An electric aircraft engine, presented in EP 3 998 213 A1, comprises a fan (rotor), an electric motor actuating the rotation of the fan and an engine control unit (ECU) controlling the electric motor, wherein the rotation of the fan provides a main flow of air causing the thrust of the engine, and wherein the ECU is located within the volume defined by the main flow.

The electric motor converts electrical energy supplied from batteries (in particular, lithium-ion batteries, which are currently leading the market) into mechanical energy to rotate the blades of the respective fan. Hence, DC/AC converters - commonly called inverters - are necessary to convert DC from the batteries into AC to be supplied to the electric motors.

In inverters, all electronic components are usually integrated into one housing or otherwise arranged as close together as possible. Spreading the electronic components across different structural parts of the aircraft has so far proved incompatible with the task of meeting the requirement for low parasitic commutation inductance. This is because it is known that the commutation inductance increases with increasing distance between the DC-link capacitor and the power module (power switches). However, to enable fast switching times without generating excessive turn-off overvoltages (voltage spikes), the commutation inductances of the inverters have to be minimized.

Therefore, the components of the inverter are packed close together to substantially reduce parasitic inductance. Two power switches are connected to form an associated pair of one phase of a three-phase inverter. The components of the inverter are generally surrounded by a housing that protects the inverter components from damage, heat, or other outside elements that could impair the functionality of the inverter. The resultant housing with all components has a minimum size that requires the allocation of design space. However, the design space is limited by top-level performance requirements of the aircraft (corresponding to a range of values prescribed for the geometric and aerodynamic aircraft parameters).

Although applications of smart structures technology to aerospace are known, for example in the form of embedded or surface-bonded smart actuators on an airplane wing or helicopter blade, existing structural components of an aircraft are not typically used to house electronic components (such as power switches) of an inverter circuit.

Moreover, insert molding, also known as metal insert molding or plastic insert molding, is commonly used to add inserts to injection molded parts during molding rather than after the parts have cured. The typical applications of insert molding in the aerospace industry include seating of aircraft, stowage bin latches, handles, lavatories, and user interface switches.

However, conventional inverter housings are used to install inverters in a general aviation aircraft. These inverter housings can have various shapes but usually always require additional air or liquid cooling means. An air cooling system may utilize heat pipes for transporting the heat (in particular, from the stressed switching devices) and cooling fins for dissipating it, while a liquid cooling system may utilize a pumped liquid (for example, water) for transporting the heat to a radiator, from which it gets sent out of the system.

However, the required cooling means (such as air cooling fins or liquid cooling channels with liquid filled radiators) introduce additional mass and/or aerodynamic drag, which obviously accounts for increased energy consumption limiting the efficiency of the electric aircraft. Furthermore, these cooling means limit the efficient use of the available space of the electric aircraft, making it more difficult to meet payload volume requirements.

Nevertheless, the power electronic components (e.g., power switches) of a power electronic system (e.g., an inverter) for driving an electric aircraft engine have high power dissipation that requires efficient heat extraction. In particular, inverters, like all semiconductor-based equipment, are sensitive to overheating and, in general, operate best at cooler temperatures. It is therefore necessary to place the power electronic components (e.g., power switches) in or close to an area with good heat dissipation capacity.

Hence, the object underlying the present invention resides in providing an electric aircraft engine and a method of manufacturing a vane for an electric aircraft engine, which permit a reduction in mass and/or aerodynamic drag, and optimum utilization of the available installation space without impairing the electrical performance (in particular, switching performance) and thus the efficiency of the power electronic system.

According to the present invention this object is solved by providing an electric aircraft engine having the features of independent claim 1 and a method of manufacturing a vane for an electric aircraft engine having the features of independent claim 17. Advantageous embodiments of the present invention are the subject of the dependent claims.

In detail, an electric aircraft engine according to the present invention comprises an electric motor, a power electronic system for supplying power to the electric motor, a fan mechanically coupled to the electric motor and having a plurality of blades rotatable about an axis of the engine, and a stator stage having a plurality of vanes at least partially arranged in an inlet or outlet air flow path of the fan, wherein the power electronic system comprises a plurality of power electronic components, and wherein at least one power electronic component is embedded in at least one of the plurality of vanes.

By using existing structural components, i.e. the vanes of the electric aircraft engine, to house the power electronic components, two key advantages are achieved. First, no additional installation space needs to be provided for the power electronic components. Second, there is no need to provide additional cooling measures (such as liquid cooling technology or air-cooled heat sinks, e.g. in the form of cooling fins), which are costly and space and weight intensive. The embedded power electronic components benefit from the high air mass flow of the fan and thus from the high heat transfer of the vanes.

In an advantageous embodiment of the present invention, it is provided that the at least one embedded power electronic component is a power switch.

The efficient heat extraction enabled by the present invention is particularly advantageous for power switches of an inverter, which typically have high power dissipation.

In a further particularly advantageous embodiment of the present invention, it is provided that the power switch is a power semiconductor switch, such as a MOSFET, an IGBT, a HEMT or a JFET.

High-power switches require high power dissipation capability, which is made possible by the high heat transfer coefficient of the vanes when air passes at a high mass flow rate over the surfaces of the vanes as a result of the rotation of the engine fan.

According to still a further aspect of the present invention, the at least one embedded power electronic component is a DC bus bar that supplies a power converter.

By routing this DC bus bar through the vane, it can also benefit from the high cooling capability of the vane. Further, this has the advantage that the DC bus bar can be dimensioned smaller, which leads to an overall reduction in mass.

In accordance with a further advantageous embodiment of the present invention, at least one power electronic component is mounted to a circuit carrier, in particular a ceramic substrate or a printed circuit board, and the circuit carrier with the at least one power electronic component mounted thereto is embedded in one of the plurality of vanes.

The heat flow, which is generated in the surface-mounted electronic component, is transported into the printed circuit board material via heat conduction, where it is spread more or less geometrically due to its copper layer content. The printed circuit board can in turn be mounted on an internal metallic surface of the vane, which then serves as a heat sink for efficient heat dissipation.

According to still a further preferred embodiment of the present invention, the circuit carrier is rigidly attached to or integrated with the vane.

In both cases (rigid attachment or integration), relative motion between the circuit carrier and the vane is avoided to prevent electrical failures and malfunctions.

It is particularly preferred that the vane is filled with a potting compound which, after curing, ensures secure attachment of the circuit carrier and enables the reduction of creepage and clearance distances of the circuit carrier.

The potting compound (after curing) not only ensures secure attachment of the circuit carrier, but also fills the circuit carrier's enclosure and, in most cases, encapsulates the entire circuit carrier and its electronic components in a protective block.

In a further preferred embodiment, the power electronic system comprises a three-phase inverter for driving the electric motor, and the power electronic components comprise power switches and passive components of said inverter.

Placing the power switches and passive components in the vane does not compromise the electrical performance of the three-phase inverter. On the contrary, this placement makes the inverter components robust to environmental influences (such as moisture and vibration).

It is preferred that the passive components of the inverter comprise at least one DC-link capacitor and at least one damping resistor.

Passive components such as resistors, inductors and capacitors can be integrated into the vane structure to ensure their optimum cooling (without the need for additional cooling fins).

A preferable implementation is a power electronic building block, comprising two power switches in a half-bridge configuration, a gate driver for each switch and a local DC-link capacitor that may have a damping resistor in series. The half-bridge configuration comprises a high-side and a low-side switch position, wherein each switch position may consist of multiple power switches (MOSFETs or IGBTs). The DC-link capacitor is placed in close proximity to the power switches and may have the damping resistor to dampen possible resonance with other distributed DC-link capacitors. Integrating such a power electronic building block in an electric aircraft engine reduces weight because a housing would no longer be needed. It would also create additional installation space that could be used for the energy storage means, for example. Such integration would also eliminate the cost of wiring the engine to the inverter and would require fewer assembly steps.

Furthermore, it is preferred that the half-bridge is mounted to one circuit carrier, said one circuit carrier with the half-bridge mounted thereto being embedded in one of the plurality of vanes.

The components (especially the MOSFETs) belonging to one half-bridge (one motor phase) are all mounted on one circuit carrier embedded in one vane. This is done because a symmetric and low inductive configuration allows for equal current sharing and power dissipation among parallel MOSFETs.

Provision can, however, alternatively be made for the half-bridge to be split so that it is mounted to two circuit carriers, a high-side circuit carrier for the high-side power switch and a low-side circuit carrier for the low-side power switch, preferably with low-inductance interconnection between the two circuit carriers.

In a high-power converter one half-bridge may be distributed over more than one circuit carrier such that an equal number of high- and low-side switches are placed on each circuit carrier. The circuit carriers are electrically connected in parallel. This allows to have multiple parallel MOSFETs with smaller circuit carriers. In this embodiment additional passive devices may be needed to suppress circulating currents.

In a method of manufacturing a vane for an electric aircraft engine according to the present invention, at least one circuit carrier, in particular a ceramic substrate or a printed circuit board, to which at least one power electronic component is mounted, is inserted into a negative mold in the shape of the vane, and subsequently the vane is formed by injection molding or transfer molding.

By embedding the power electronic components in an existing structural component (vane) using insertion molding technology, installation space and weight can be saved, since in particular the separate accommodation of these power electronic components in a central housing and also additional cooling of these power electronic components (e.g. by a separate air or liquid cooling system) are no longer necessary. This also leads to cost savings.

Further features and details of the present invention will be apparent from the claims and the following description of an embodiment based on the drawings, in which:
Fig. 1 shows an overall perspective view of an electric aircraft engine according to the present invention with the peripheral duct enclosing the operating components removed for ease of illustration;
Fig. 2 shows a vane of an electric aircraft engine according to the present invention, in which electronic components of an inverter for driving a motor of said engine are embedded;
Fig. 3 shows the vane of Fig. 2, with one of the outer skins of the vane removed; and
Fig. 4 schematically shows an inverter half-bridge to be embedded in one portion of the vane according to Fig. 1.

Electric aircraft engines 1 pose unique and sophisticated challenges, as the power-to-weight ratio of the electric aircraft engine 1 should be maintained and even improved as much as possible to generate enough thrust to lift an aircraft such as an electrically powered vertical take-off and landing (eVTOL) aircraft.

An electric aircraft engine 1 includes an electric motor that drives an engine fan 2 to provide thrust to the aircraft. The engine fan 2 includes a plurality of blades 13 radially attached to a shaft defining a central axis about which the blades 13 are rotatable. This shaft is directly connected to a rotor of the electric motor, which drives the engine fan 2 at a variable speed.

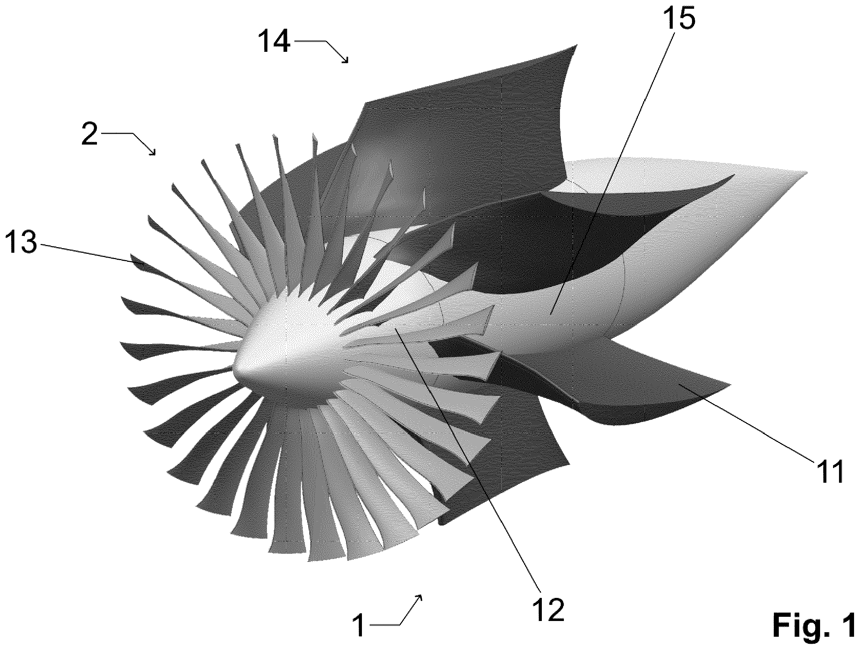

Referring to Fig. 1, an exemplary electric aircraft engine 1 of the present invention has a fan 2, which comprises a fan disk 12 having an even or odd number of blades 13 spaced from each other in a circumferential direction of the fan disk 12, which is rotated by the shaft driven by the electric motor. The blades 13 are arranged on the fan disk 12 in a symmetric star-shaped configuration when viewed in the direction of the central axis of the electric aircraft engine 1.

The electric aircraft engine 1 has a duct, which defines a longitudinal axis of the engine 1 and is open at the base faces thereof. The fan 2 and the electric motor for driving the fan 2 are installed in the duct, wherein the plurality of fan blades 13 are set up to rotate in a plane perpendicular to the longitudinal axis of the engine 1. The duct has a positive effect on the performance of the propulsion system. For ease of illustration, this peripheral duct has been omitted in the overall engine illustration of Fig. 1.

Further, the electric aircraft engine 1 comprises a stator stage 14 disposed inside the duct and in a flow path of the fan 2. Said stator stage 14, in turn, comprises a plurality of circumferentially spaced vanes 11. The vanes 11 may direct air into the electric aircraft engine 1 or direct air out from the electric aircraft engine 1. In the former case, the vanes 11 are located in front of the fan 2 (e.g., inlet guide vanes or IGV). In the latter case, which is illustrated in Fig. 1, the vanes 11 are located behind the fan 2 (e.g., outlet guide vanes or OGV). The vanes 11 may have angles that can be manipulated to change the angle of air flow into and out of the electric aircraft engine 1.

Fig. 1 illustrates an interior view of the electric aircraft engine 1 comprising a stator stage 14 with a plurality (an even or odd number) of outlet guide vanes 11 (disposed downstream of the fan 2) for dissipating heat in accordance with an exemplary embodiment. Referring to this Fig. 1, the substantially radially extending outlet guide vanes 11 are positioned in a cylindrical fashion around a stationary central hub 15 so as to be circumferentially spaced from each another. As a result, the vanes 11 are arranged on said hub 15 in a symmetric star-shaped configuration when viewed in the direction of the central axis of the electric aircraft engine 1.

Each of the plurality of vanes 11 is radially connected between the stationary central hub 15 (which may correspond to a casing surface of the electric motor) and a corresponding inner surface position of the duct (not shown). Therefore, each of the plurality of vanes 11 again is a stationary blade with respect to the duct (not shown).

Each vane 11 includes an airfoil shape with a leading edge and a trailing edge formed in certain curvatures for its curved side surfaces and corresponding orientations with respect to the central axis of rotation. In particular, the leading edge of each stationary airfoil shaped vane 11 is near the trailing edges of the rotary fan blades 13. In the embodiment of Fig. 1, the arrangement of the plurality of stationary vanes 11 downstream of the fan blades 13 within the duct (not shown) effectively is configured to deswirl the swirl flow of air and generate an axial outflow of air with improved capacity in terms of pressure enhancement.

Due to the air flow generated by the fan 2, the vanes 11 are continuously exposed to a high mass flow rate of ambient air on the outer surfaces thereof and can provide for rapid cooling of embedded components. The engine configuration is not limited to that shown in Fig. 1, and the vanes 11 may include inlet guide vanes in addition to or as an alternative to outlet guide vanes.

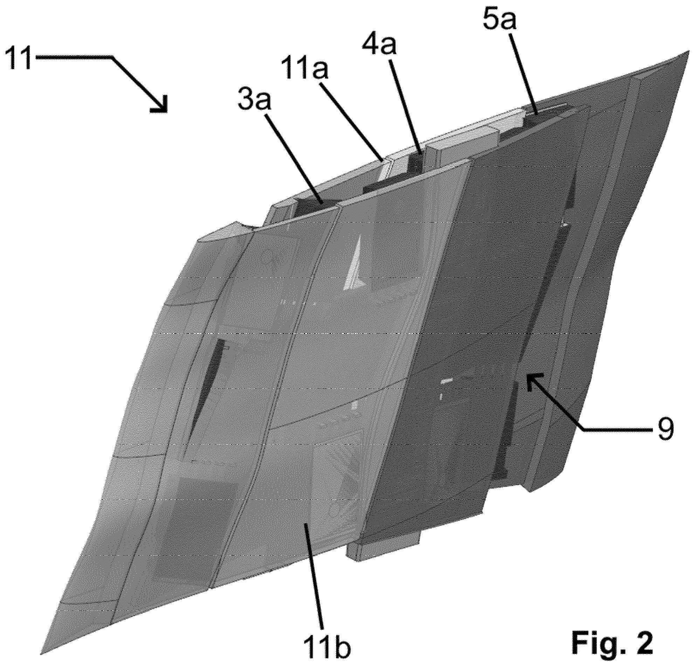

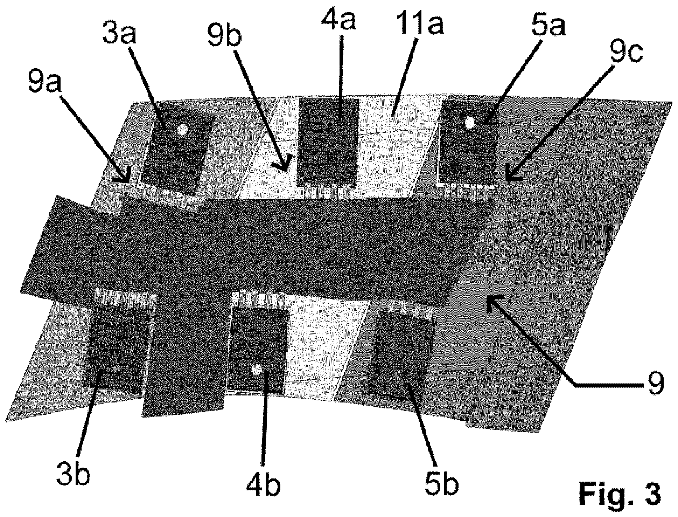

The vane 11, and in particular the internal structure of the vane 11, a plurality of which are included in the stator stage 14 of the electric aircraft engine 1 shown in Fig. 1, forms the very gist of the present invention, and will therefore be explained in more detail below with reference to Figs. 2 and 3.

The electric aircraft engine 1 also necessarily includes a power electronic system for supplying power to the electric motor from an on-board power source. In particular, the electric motor may be driven by one or more inverters 9 that convert DC power from a DC power source (e.g., an on-board battery) into AC power to drive the electric motor.

However, the power electronic components of the power electronic system (in particular, the power switches 3a, 3b, 4a, 4b, 5a, 5b of the inverter 9) for supplying power to the electric motor have a high power dissipation, which requires efficient heat extraction. To achieve this, the power electronic components (in particular, the power switches 3a, 3b, 4a, 4b, 5a, 5b of the inverter 9) are embedded in at least one of the plurality of vanes 11 of the stator stage of the electric aircraft engine (see Figs. 2 and 3). Advantageously, the vanes 11 provide a high heat transfer coefficient as the air flows through the fan and, thus, passes the vanes 11 at a high mass flow rate and with at least partially turbulent flow characteristics and comes into direct contact with the outer surfaces of the vanes 11.

Electric power is supplied from the power source to the embedded power electronic components 3a, 3b, 4a, 4b, 5a, 5b, 6, 7, 8 via known electrical connection arrangements. Such arrangements are also used for conducting current from the embedded power electronic components 3a, 3b, 4a, 4b, 5a, 5b, 6, 7, 8 to the stator windings or coils when the electric motor drives the fan blades 13.

Power converters, such as inverters, are usually designed so that the power semiconductor switches are located in close proximity to the main DC-link capacitor. Accordingly, the interconnection of the switches to the capacitors is generally designed to minimize parasitic inductance.

In contrast, the present invention allows the power switches 3a, 3b, 4a, 4b, 5a, 5b to be distributed over one or more vanes 11 and the main DC-link capacitor to be placed at another central location outside the plurality of vanes 11 without compromising the switching performance and thus the efficiency of the power converter.

In the embodiment shown in Figs. 2 and 3, the vane surface is divided into a plurality of portions which are adjacent to each other along a longitudinal direction of extension of the vane 11 (corresponding to the radial direction of the engine) and are shown by different shading in Figs. 2 and 3. Each of these portions of the vane 11 serves as a thermal patch for cooling the power electronic components (in particular the power switches 3a, 3b, 4a, 4b, 5a, 5b) sandwiched between the outer skins 11a, 11b of the respective portion of the vane 11.

The thermal patch portions of the vane 11 represent thicker sections in the vane outer skin 11a, 11b separated by intermediate portions of the vane 11, which represent very thin sections in the vane outer skin 11a, 11b and in which no power electronic components are embedded. These thin-walled intermediate portions of the vane 11 limit heat flow between two adjacent thick-walled thermal patch portions of the vane 11. The sizes of the thermal patch portions of the vane 11 are selected so that each patch can dissipate the same amount of thermal energy, taking into account the respective heat transfer coefficient.

Preferably, the heat dissipating areas of the thermal patch portions are adapted to take account of the variation of the heat transfer coefficient along the span of the respective vane 11 so that all inverter half-bridges 9a, 9b, 9c are maintained at approximately the same temperature.

The power switches 3a, 3b, 4a, 4b, 5a, 5b of an integrated inverter 9 shown in Figs. 2 and 3 represent only one example of the power electronic components that can be embedded in the vane 9 to benefit from its excellent heat extraction capability. Instead or in addition, other power electronic components, such as a DC bus bar supplying power to an ECU of the electric aircraft engine, can also be routed through the vane 11, resulting in the same advantageous effects.

Unlike conventional power converters, in which the power electronic components are typically accommodated in a separate central housing to provide close proximity between the power switches and the DC-link capacitor and achieve low parasitic commutation inductance, the present invention dispenses with such a spacious, heavy and costly solution as it now distributes the power electronic components 3a, 3b, 4a, 4b, 5a, 5b, 6, 7, 8 at least in part to the existing structural components (vanes 11) of the electric aircraft engine.

To illustrate in more detail the power electronic components 3a, 3b, 4a, 4b, 5a, 5b embedded in the vane 11, Fig. 3 shows the vane 11 of Fig. 2 with one of the outer skins 11b removed. As can now be seen, a three-phase inverter 9 with three inverter half-bridges 9a, 9b, 9c is embedded in the vane 11. Each inverter half-bridge 9a or 9b or 9c contains two power switches 3a, 3b or 3a, 3b or 5a, 5b, one high side and one low side. In the present case, the power switches 3a, 3b, 4a, 4b, 5a, 5b are preferably power MOSFETs. However, power MOSFETs are usually operated under severe conditions of high-power dissipation, so high junction temperatures may lead to poor reliability and ultimately premature failure of components. Therefore, thermal management is essential inpower converter designs.

Rather than relying on air-cooled heat sinks and/or liquid cooling systems commonly used for power supplies, the present invention achieves highly efficient heat dissipation by embedding the power electronic components (especially the power MOSFETs 3a, 3b, 4a, 4b, 5a, 5b) in at least one of the plurality of vanes 11. It should be noted that instead of power MOSFETs, other power semiconductor switches such as IGBTs can be embedded in one or more vanes 11. All semiconductor devices dissipate heat to some degree. Therefore, thermal considerations are always fundamental in the development of power electronics.

In the present case, all power switches 3a, 3b or 4a, 4b or 5a, 5b of one inverter half-bridge 9a or 9b or 9c are arranged on a single circuit carrier 10 (preferably a ceramic substrate or a printed circuit board, PCB). The dominant path for heat dissipation in the case of surface mounting (by soldering or sintering) on a circuit carrier 10 is through the circuit carrier 10. Since the circuit carrier 10 is directly attached to the metallic inner surface of the outer skin 11a, 11b of the vane 11, the power electronic components (especially the power switches 3a, 3b, 4a, 4b, 5a, 6b) benefit from the high cooling capacity of the vane 11 during operation of the engine.

To provide superior heat dissipation capability, the circuit carrier 10 does not necessarily have to be rigidly attached to a metallic vane surface. Instead, or in addition, the metallic vane 11 can be filled in its interior with a potting compound which (after curing) provides a secure attachment of the circuit carrier 10. Preferably, the potting compound has a high thermal conductivity so that heat is transferred to all sides of the vane 11. Moreover, the potting compound protects the power electronic components from pollution in accordance with the requirements of IEC 60664-3 and enables the reduction of clearance and creepage distances to achieve a low overall stray inductance.

In another alternative to the two embodiments described above (attaching the circuit carrier 10 to the metallic vane 11 and/or filling the metallic vane 11 with a potting compound to secure the circuit carrier 10), one or more circuit carriers 10 can be placed in a negative mold in the shape of the vane 11. Then, the shape of the thermoplastic vane 11 is produced by injection molding or transfer molding. Structural integrity can be improved by also placing metal structures in the mold. Preferably, the finished part has high thermal conductivity to allow heat dissipation on all sides of the vane 11. As with the potting compound solution mentioned above, the power electronic components are protected from pollution by the use of molding as described in IEC 60664-3, which enables a reduction in clearance and creepage distances (contributing to a reduction in stray inductance and voltage overshoot in the respective power electronic module).

Embedding the three-phase inverter 9 with its six power switches 3a, 3b, 4a, 4b, 5a, 5b in the vane 11 of the ducted fan, as shown in Figs. 2 and 3, is a high integrity solution that can be retrofitted by replacing existing vanes with vanes 11 according to the present invention. As an alternative to Figs. 2 and 3, a power converter that distributes its power switches among multiple vanes is also conceivable. In both cases (single-vane or multi-vane solution), the power switches 3a, 3b, 4a, 4b, 5a, 5b benefit from the high air mass flow through the engine 1, which imparts a high heat transfer coefficient to the outer surfaces of the vane 9.

At the same time, the power switches 3a, 3b, 4a, 4b, 5a, 5b and the other passive components 6, 7 of the inverter 9 are arranged so that, despite their location in the single vane 11 or the multiple vanes, the electrical performance is not compromised.

The use of an insertion molding technique opens up the possibility of integrating the power electronic components 3a, 3b, 4a, 4b, 5a, 5b, 6, 7, 8 into the vane 11 in a simple and cost-effective manner, while at the same time making these components robust against environmental influences (humidity, vibration etc.). In insertion molding, every component is secured in a thermoplastic preventing misalignment, loosening of parts and terminations.

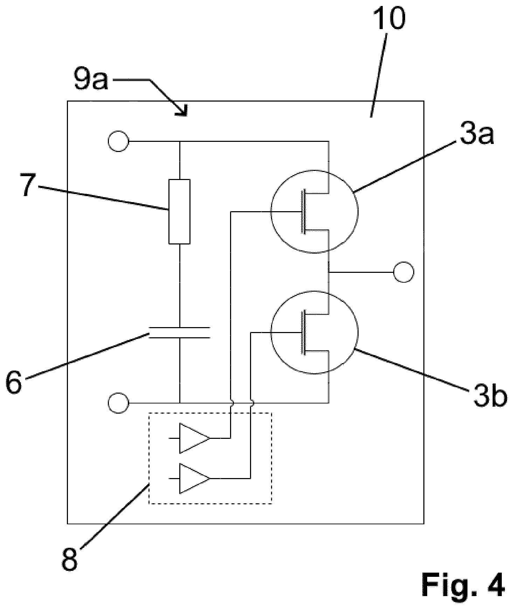

Fig. 4 shows a circuit diagram of an inverter half-bridge 9a surface-mounted on a circuit carrier 10 (e.g., a PCB or other substrate). The circuit carrier 10 and the inverter half-bridge 9a mounted thereon are embedded in one portion of one vane 11 of the electric aircraft engine. This vane portion serves as a thermal patch to dissipate the heat generated by the power electronic components 3a, 3b, 6, 7, 8 of the inverter half-bridge 9a as quickly as possible into the airflow generated by the fan. In this way, overheating of the power electronic components 3a, 3b, 6, 7, 8, which are very sensitive to temperature peaks, is avoided. As a consequence, performance degradation of these power electronic components 3a, 3b, 6, 7, 8 and unstable operation or even failure of the power converter (inverter 9) can be prevented.

As shown in Fig. 4, the power switches 3a, 3b (preferably power semiconductor switches such as IGBTs or MOSFETs) of the inverter 9 are grouped in a half-bridge or phase-leg configuration. Each inverter half-bridge 9a, embedded in one thermal patch portion of one vane 11, has a positive and a negative DC supply input connected to a central capacitor (not shown), preferably via a bus bar. Furthermore, each inverter half-bridge 9a has a phase output connected to the electric motor (not shown) of the electric aircraft engine.

As also shown in Fig. 4, each inverter half-bridge 9a has a high-side switch 3a (connected between the positive power line and the output) and a low-side switch 3b (connecting the output to the negative power line). All components of one inverter half-bridge 9a are located on a single circuit carrier 10 (preferably a ceramic substrate or a PCB). Since in the embodiment shown in Figs. 2 and 3, the circuit carrier 10 with the power electronic components (in particular the switches 3a, 3b) mounted thereon is directly attached to the metallic inner surface of the outer skins 11a, 11b of the vane 11, the heat dissipated by these power electronic components (in particular the switches 3a, 3b) flows through the material of the circuit carrier 10 (in the case of a PCB, predominantly copper) and then through the material of the vane 11 (metal and/or metal alloy and/or thermoplastic) before being dissipated to the ambient air by convection and radiation on the outside of the vane 11. Advantageously, the high mass flow rate of air passing through the fan, which is necessary to generate the required thrust of the electric aircraft, also results in negligible thermal resistance of the outside of the vane 11 to the ambient air. Therefore, the heat dissipated by the power electronic components 3a, 3b, 6, 7, 8 in Fig. 4 can be efficiently removed from these heat sensitive components without the need for costly, space and weight consuming additional cooling elements (such as air cooling fins or liquid cooling channels).

As can be further seen in Fig. 4, the inverter half-bridge 9a surface-mounted to the single circuit carrier 10 also has passive components - a local DC-link capacitor 6 in series with a resistor 7. The local capacitor 6 and the resistor 7 are connected between the positive and negative DC supply terminals and in parallel with the power switches 3a, 3b. The local capacitor 6 is preferably selected with a small capacitance (in the nano-Farad range) but with a high ripple current capability (typically several Amps). The value of the resistor 7 is selected to critically damp or over-damp the oscillation between the local capacitor 6 and the central capacitor (not shown) while avoiding excessive Ohmic losses.

The local capacitor 6 and the resistor 7 are arranged on the circuit carrier 10 with the power switches 3a, 3b such that they are embedded along one thermal patch portion of one vane 11. On the one hand, this ensures minimization of the parasitic commutation inductance. On the other hand, this also allows the local capacitor 6 and the resistor 7 to benefit from the high cooling capability of the vane 11.

As outlined by dashed lines in Fig. 4, a gate driver 8 for the power switches 3a, 3b (e.g. MOSFETs) and possibly associated protection circuitry can also be surface-mounted to the circuit carrier 10 to be also embedded in the same one thermal patch portion of one vane 11 (according to Figs. 2 and 3), providing the two advantages mentioned above.

However, it is also conceivable that the gate driver 8 and the associated protection circuitry are surface-mounted to another circuit carrier 10 (preferably a PCB) located in the same or in another vane 11, or that they are even located outside the plurality of vanes 11.

As a further alternative, the previously described half-bridge configuration can be divided into one circuit carrier for the high-side switch 3a and one circuit carrier for the low-side switch 3b, both embedded in the same vane 11, preferably with a low-inductance interconnection. In this case, the local capacitor 6 and the resistor 7 may be located either on the circuit carrier for the high-side switch 3a or on the circuit carrier for the low-side switch 3b, or on a separate circuit carrier in the same vane 11. The gate driver 8 may also be located on the associated high-side or low-side circuit carrier, or on a separate circuit carrier in the same vane 11.

## Claims

1. Electric aircraft engine (1), comprising an electric motor, a power electronic system for supplying power to the electric motor, and a fan (2) mechanically coupled to the electric motor and having a plurality of blades (13) rotatable about an axis of the engine, and a stator stage (14) having a plurality of vanes (11) at least partially arranged in an inlet or outlet air flow path of the fan (2), wherein the power electronic system comprises a plurality of power electronic components (3a, 3b, 4a, 4b, 5a, 5b, 6, 7, 8),
**characterized in that**
at least one power electronic component (3a, 4b, 4a, 4b, 5a, 5b, 6, 7, 8) is embedded in at least one of the plurality of vanes (11).

2. Electric aircraft engine (1) according to claim 1,
wherein
the at least one embedded power electronic component is a power switch (3a, 3b, 4a, 4b, 5a, 5b).

3. Electric aircraft engine (1) according to claim 2,
wherein
the power switch is a power semiconductor switch, such as a MOSFET (3a, 3b, 4a, 4b, 5a, 5b) or an IGBT.

4. Electric aircraft engine (1) according to any one of claims 1 to 3,
wherein
the at least one embedded power electronic component is a DC bus bar that supplies a power converter.

5. Electric aircraft engine (1) according to any one of claims 1 to 4,
wherein
at least one power electronic component (3a, 3b, 4a, 4b, 5a, 5b, 6, 7, 8) is mounted to a circuit carrier (10), in particular a ceramic substrate or a printed circuit board, and the circuit carrier (10) with the at least one power electronic component (3a, 3b, 4a, 4b, 5a, 5b, 6, 7, 8) mounted thereto is embedded in one of the plurality of vanes (11).

6. Electric aircraft engine (1) according to claim 5,
wherein
the circuit carrier (10) is rigidly attached to or integrated with the vane (11).

7. Electric aircraft engine (1) according to claim 5 or 6,
wherein
the vane (11) is filled with a potting compound which, after curing, ensures secure attachment of the circuit carrier (10) and enables the reduction of creepage and clearance distances of the circuit carrier (10).

8. Electric aircraft engine (1) according to any one of claims 1 to 7,
wherein
the power electronic system comprises a three-phase inverter (9) for driving the electric motor, and the power electronic components comprise power switches (3a, 3b, 4a, 4b, 5a, 5b) and passive components (6, 7) of said inverter (9).

9. Electric aircraft engine (1) according to claim 8,
wherein
the passive components comprise at least one DC-link capacitor (6) and at least one damping resistor (7).

10. Electric aircraft engine (1) according to any one of claims 1 to 9,
wherein
the power electronic system is a power electronic building block, comprising two power switches (3a, 3b, 4a, 4b, 5a, 5b) in a half-bridge (9a, 9b, 9c) configuration, a gate driver (8) for each switch (3a, 3b, 4a, 4b, 5a, 5b), and a local DC-link capacitor (6) having a damping resistor (7) in series, wherein the half-bridge (9a, 9b, 9c) configuration comprises a high-side and a low-side switch position, wherein each switch position consists of multiple parallel power devices, and wherein the DC-link capacitor (6) is placed in close proximity to the power switches (3a, 3b, 4a, 4b, 5a, 5b) and has the damping resistor (7) to dampen possible resonance with other distributed DC-link capacitors.

11. Electric aircraft engine (1) according to claim 10,
wherein
the half-bridge (9a, 9b, 9c) is mounted to one circuit carrier (10), said one circuit carrier (10) with the half-bridge (9a, 9b, 9c) mounted thereto being embedded in one of the plurality of vanes (11).

12. Electric aircraft engine (1) according to claim 10,
wherein
the half-bridge (9a, 9b, 9c) is split so that it is mounted to two circuit carriers, a high-side circuit carrier for the high-side power switch (3a, 4a, 5a) and a low-side circuit carrier for the low-side power switch (3b, 4b, 5b), preferably with low-inductance interconnection between the two circuit carriers.

13. Electric aircraft engine (1) according to claim 12,
wherein
both the high-side circuit carrier and the low-side circuit carrier are embedded in the same vane (11).

14. Electric aircraft engine (1) according to any one of claims 1 to 13,
wherein
a plurality of embedded power electronic components (3a, 3b, 4a, 4b, 5a, 5b, 6, 7, 8) are sandwiched between outer skins (11a, 11b) of the vane (11), to create a plurality of thermal patch portions along the longitudinal extent of the vane (11), said thermal patch portions are sized that all power electronic components (3a, 3b, 4a, 4b, 5a, 5b, 6, 7, 8) are maintained at the same temperature with respect to a varying heat transfer coefficient along the span of the vane (11) and are separated from each other by intermediate portions in which no power electric components are sandwiched between the outer skins (11a, 11b) of the vane (11), and
the wall thicknesses of the outer skins (11a, 11b) in the intermediate portions of the vane (11) are smaller than the wall thicknesses of the outer skins (11a, 11b) in the thermal patch portions of the vane (11), thereby inhibiting thermal flux between the thermal patch portions of the vane (11).

15. Electric aircraft engine (1) according to any one of claims 1 to 14,
wherein
the engine (1) has a stationary central hub (15) with an even or odd number of vanes (11) and the vanes (11) with the at least one embedded power electronic component (3a, 4b, 4a, 4b, 5a, 5b, 6, 7, 8) are arranged on said hub (15) in a symmetric star-shaped configuration.

16. Aircraft, equipped with at least one electric aircraft engine (1) according to any one of claims 1 to15.

17. Method of manufacturing a vane (11) for an electric aircraft engine (1),
**characterized in that**
at least one circuit carrier (10), in particular a ceramic substrate or a printed circuit board, to which at least one power electronic component (3a, 3b, 4a, 4b, 5a, 5b, 6, 7, 8) is mounted, is inserted into a negative mold in the shape of the vane (11), and subsequently the vane (11) is formed by injection molding or transfer molding.

18. Method according to claim 17,
wherein
a metal structure for reinforcing the vane (11) is inserted into the mold before the vane (11) is formed by injection molding or transfer molding, and preferably the at least one circuit carrier (10) with the at least one power electronic component (3a, 3b, 4a, 4b, 5a, 5b, 6, 7, 8) mounted thereto is attached to the metal structure prior to insertion into the mold.

## Amended claims

### Amended claims in accordance with Rule 137(2) EPC.

1. Electric aircraft engine (1), comprising an electric motor, a power electronic system for supplying power to the electric motor, and a fan (2) mechanically coupled to the electric motor and having a plurality of blades (13) rotatable about an axis of the engine, and a stator stage (14) having a plurality of vanes (11) at least partially arranged in an inlet or outlet air flow path of the fan (2), wherein the power electronic system comprises a plurality of power electronic components (3a, 3b, 4a, 4b, 5a, 5b, 6, 7, 8), and wherein at least one power electronic component (3a, 4b, 4a, 4b, 5a, 5b, 6, 7, 8) is embedded in at least one of the plurality of vanes (11),
**characterized in that**
at least one power electronic component (3a, 3b, 4a, 4b, 5a, 5b, 6, 7, 8) is mounted to a circuit carrier (10), in particular a ceramic substrate or a printed circuit board, and the circuit carrier (10) with the at least one power electronic component (3a, 3b, 4a, 4b, 5a, 5b, 6, 7, 8) mounted thereto is embedded in one of the plurality of vanes (11).

2. Electric aircraft engine (1) according to claim 1,
wherein
the at least one embedded power electronic component is a power switch (3a, 3b, 4a, 4b, 5a, 5b).

3. Electric aircraft engine (1) according to claim 2,
wherein
the power switch is a power semiconductor switch, such as a MOSFET (3a, 3b, 4a, 4b, 5a, 5b) or an IGBT.

4. Electric aircraft engine (1) according to any one of claims 1 to 3,
wherein
the at least one embedded power electronic component is a DC bus bar that supplies a power converter.

5. Electric aircraft engine (1) according to any one of claims 1 to 4,
wherein
the circuit carrier (10) is rigidly attached to or integrated with the vane (11).

6. Electric aircraft engine (1) according to any one of claims 1 to 5,
wherein
the vane (11) is filled with a potting compound which, after curing, ensures secure attachment of the circuit carrier (10) and enables the reduction of creepage and clearance distances of the circuit carrier (10).

7. Electric aircraft engine (1) according to any one of claims 1 to 6,
wherein
the power electronic system comprises a three-phase inverter (9) for driving the electric motor, and the power electronic components comprise power switches (3a, 3b, 4a, 4b, 5a, 5b) and passive components (6, 7) of said inverter (9).

8. Electric aircraft engine (1) according to claim 7,
wherein
the passive components comprise at least one DC-link capacitor (6) and at least one damping resistor (7).

9. Electric aircraft engine (1) according to any one of claims 1 to 8,
wherein
the power electronic system is a power electronic building block, comprising two power switches (3a, 3b, 4a, 4b, 5a, 5b) in a half-bridge (9a, 9b, 9c) configuration, a gate driver (8) for each switch (3a, 3b, 4a, 4b, 5a, 5b), and a local DC-link capacitor (6) having a damping resistor (7) in series, wherein the half-bridge (9a, 9b, 9c) configuration comprises a high-side and a low-side switch position, wherein each switch position consists of multiple parallel power devices, and wherein the DC-link capacitor (6) is placed in close proximity to the power switches (3a, 3b, 4a, 4b, 5a, 5b) and has the damping resistor (7) to dampen possible resonance with other distributed DC-link capacitors.

10. Electric aircraft engine (1) according to claim 9,
wherein
the half-bridge (9a, 9b, 9c) is mounted to one circuit carrier (10), said one circuit carrier (10) with the half-bridge (9a, 9b, 9c) mounted thereto being embedded in one of the plurality of vanes (11).

11. Electric aircraft engine (1) according to claim 9,
wherein
the half-bridge (9a, 9b, 9c) is split so that it is mounted to two circuit carriers, a high-side circuit carrier for the high-side power switch (3a, 4a, 5a) and a low-side circuit carrier for the low-side power switch (3b, 4b, 5b), preferably with low-inductance interconnection between the two circuit carriers.

12. Electric aircraft engine (1) according to claim 11,
wherein
both the high-side circuit carrier and the low-side circuit carrier are embedded in the same vane (11).

13. Electric aircraft engine (1) according to any one of claims 1 to 12,
wherein
a plurality of embedded power electronic components (3a, 3b, 4a, 4b, 5a, 5b, 6, 7, 8) are sandwiched between outer skins (11a, 11b) of the vane (11), to create a plurality of thermal patch portions along the longitudinal extent of the vane (11), said thermal patch portions are sized that all power electronic components (3a, 3b, 4a, 4b, 5a, 5b, 6, 7, 8) are maintained at the same temperature with respect to a varying heat transfer coefficient along the span of the vane (11) and are separated from each other by intermediate portions in which no power electric components are sandwiched between the outer skins (11a, 11b) of the vane (11), and
the wall thicknesses of the outer skins (11a, 11b) in the intermediate portions of the vane (11) are smaller than the wall thicknesses of the outer skins (11a, 11b) in the thermal patch portions of the vane (11), thereby inhibiting thermal flux between the thermal patch portions of the vane (11).

14. Electric aircraft engine (1) according to any one of claims 1 to 13,
wherein
the engine (1) has a stationary central hub (15) with an even or odd number of vanes (11) and the vanes (11) with the at least one embedded power electronic component (3a, 4b, 4a, 4b, 5a, 5b, 6, 7, 8) are arranged on said hub (15) in a symmetric star-shaped configuration.

15. Aircraft, equipped with at least one electric aircraft engine (1) according to any one of claims 1 to 14.

16. Method of manufacturing a vane (11) for an electric aircraft engine (1),
**characterized in that**
at least one circuit carrier (10), in particular a ceramic substrate or a printed circuit board, to which at least one power electronic component (3a, 3b, 4a, 4b, 5a, 5b, 6, 7, 8) is mounted, is inserted into a negative mold in the shape of the vane (11), and subsequently the vane (11) is formed from a thermoplastic by injection molding or transfer molding.

17. Method according to claim 16,
wherein
a metal structure for reinforcing the vane (11) is inserted into the mold before the vane (11) is formed by injection molding or transfer molding, and preferably the at least one circuit carrier (10) with the at least one power electronic component (3a, 3b, 4a, 4b, 5a, 5b, 6, 7, 8) mounted thereto is attached to the metal structure prior to insertion into the mold.
